# EUROPEAN PATENT APPLICATION

(11) **EP 1 379 047 A1**
(43) Date of publication of application: **07.01.2004**
(21) Application number: 02254681.6
(22) Date of filing: 03.07.2002
(51) Int. Cl.: H04L 29/06

(54) **Method and device for interpreting of transport format combination indicators**

(71) Applicant: Agilent Technologies, Inc. - a Delaware corporation -, Palo Alto, CA 94303-0870 (US)
(72) Inventor: Brandt, Peter c/o Agilent Tech.Belg.S.A/N.V, 3110 Rotselaar (BE); Jacobs, Annemie c/o Agilent Tech.Belg.S.A/N.V, 3110 Rotselaar (BE)
(74) Representative: Coker, David Graeme

(57) **Abstract**

The present invention is related to a communication device comprising a physical layer (L1) and two or more higher layers (L2/L3), said physical layer comprising means to acquire a data modulated waveform signal (3), comprising at least one data block and an indicator of the format of said data block, means to process said block and indicator, in order to be able to map the received block onto a number of transport channels (24,25) in the higher layers, characterized in that said physical layer (L1) comprises :
- a shared memory block (30), wherein lookup tables (35,38) for transport formats (40) and transport format indicators (37) can be saved, allowing the physical layer (L1) to identify transport formats for one or more transport channels,
- a connection (32) between the physical layer (L1) and the higher layers which allows said lookup tables to be loaded into said shared memory block (30) from the higher layers,
- a finite state machine (31), capable of acquiring the transport format from the shared memory block (30).

## Description

### Field of the invention

The present invention is related to wireless transmission of data by spread spectrum techniques using CDMA or other access schemes, and to devices implementing this transmission.

### State of the art

The 3GPP TS 25.212 specification describes the operation of so called '3rd generation' wireless transmission, which is to add new services and to provide more capacity to existing protocols (e.g. GSM, GPRS,...). UMTS is a 3rd generation standard which is believed to find a wide customer base in the near future.

The above mentioned 3GPP-specification requires the implementation of a Transport Format Combination Indicator (TFCI), which is added to a data package, and which is to be interpreted in the downlink of 3rd generation UMTS user equipment. The equipment has to detect the Transport Format (TF) for all Transport Channels (TrCH) by interpreting the TFCI bits. In current systems, this interpreting step has been known to be slow and inefficient.

### Aims of the invention

The present invention aims to provide a communication device and method which overcome the disadvantages of prior art solutions.

### Summary of the invention

The present invention is related to a communication device comprising a physical layer and two or more higher layers, said physical layer comprising means to acquire a data modulated waveform signal, comprising at least one data block and an indicator of the format of said data block, means to process said block and indicator, in order to be able to map the received block onto a number of transport channels in the higher layers, characterized in that said physical layer comprises :
- a shared memory block, wherein lookup tables for transport formats and transport format indicators can be saved, allowing the physical layer to identify transport formats for one or more transport channels,
- a connection between the physical layer and the higher layers which allows said lookup tables to be loaded into said shared memory block from the higher layers,
- a finite state machine, capable of acquiring the transport format from the shared memory block.

According to the preferred embodiment, said higher layers consist of a data link layer and a network layer. Said physical layer is preferably implemented in hardware.

Said physical layer preferably comprises an inner modem and an outer modem, wherein said shared memory block and said finite state machine are part or said outer modem.

The device of the invention is preferably realized as or as part of an integrated circuit.

The invention is equally related to a method of processing a data modulated waveform signal, comprising the steps of
- Receiving by a receiving device, a data modulated waveform signal, comprising at least one data block and at least one indicator of the format of said data block, said receiving device comprising a physical layer, and a number of higher layers,
- transferring said data block over a physical data channel, while transferring said indicator over a physical control channel,
- decoding and demultiplexing said data block, in order to map said data block onto at least one transport channel,
- decoding said indicator of the format of said data block, resulting into one code for the format of said data block,
- looking up in a first table, an indicator to the format for each transport channel which corresponds to the code for the format of said data block, said first table being present in a shared memory block, which is implemented in said physical layer,
- looking up in a second table, all transport formats, which correspond to said indicator to the format for each transport channel, said second table being present in said shared memory block, which is implemented in said physical layer,
- mapping said data block onto said at least one transfer channel, in the correct transport format.

The method of the invention is preferably used for one of the following applications: IMT-2000, 3GPP, 3GGP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B, IEEE802.16.

### Short description of the drawings

Fig. 1 represents a schematic view of the layers L1, L2 and L3 of a communication device, working as a transmitter.

Fig. 2 represents the same device, used as a receiver.

Fig. 3 illustrates the present invention.

Fig. 4 illustrates the lookup tables used for TFCI identification.

### Detailed description of the invention

As a start, the architecture of a communication device of the 3rd generation is briefly described, in order to be able to outline the problem and subsequent solution offered by the present invention.

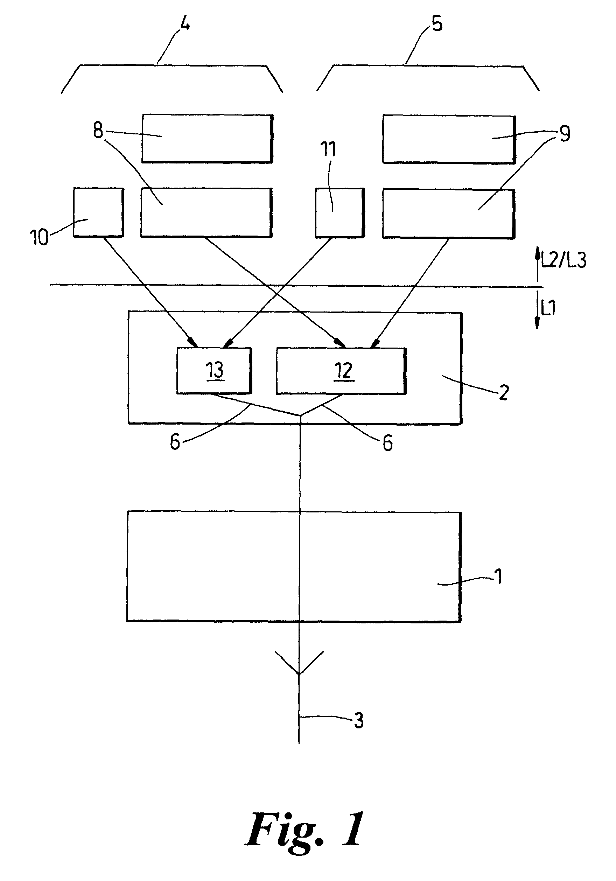

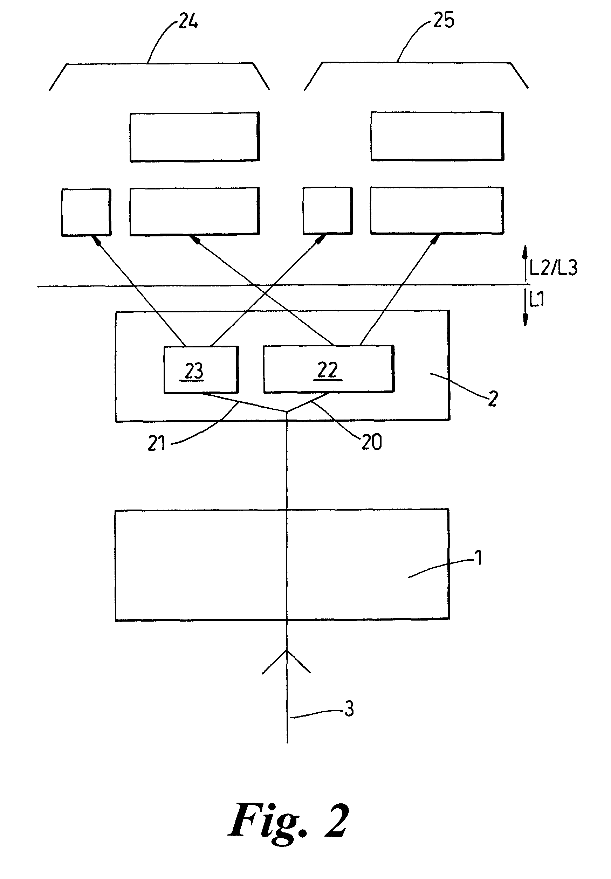

Schematically, such a device is built up of a number of layers : the physical layer L1 and the higher layers. In most cases, the higher layers consist of two software implemented layers L2 and L3 : a data link layer L2 and a network layer L3. Figures 1 and 2 show the layers but are related respectively to a transmission of data and a reception of data, which will be explained further. The physical layer L1 can be regarded as being further subdivided into two parts : an 'inner modem' 1 and an 'outer modem' 2. The inner modem is in most cases a hardware device, which is in direct contact with the signal 3, which is generally a modulated waveform signal, for example a W-CDMA signal. It is here that the signal is acquired, demodulated, and spread. The inverse operation may be performed on a package of data which is to be sent. The outer modem 2 comprises means to perform a further processing of a received signal, or to perform certain operations on a signal which is to be sent. In the case of a data package which is to be sent, the following operations may be performed by the Outer modem 2 :
- CRC attachment (Cyclic Redundancy Check
- Concatenating or segmenting the transport blocks.
- channel coding, for example by convolutional or turbo coding,
- Radio frame equalization,
- Interleaving,
- Rate matching,
- Transport channel multiplexing,
- Physical channel segmentation,
- Mapping onto the physical data channels

The outer modem is required to support variable bit rate transport channels to offer bandwidth-on-demand services (e.g. voice, video...), and to be able to multiplex several services to one connection. The difference must be emphasized between a transport channel and a physical channel. A physical channel exists in the air interface, and it is defined by a frequency and a spreading code. A transport channel concept is used in the interface between L1 and L2. A transport channel defines how the data is sent over the air without knowing the type of data (e.g. voice, video,...) .

The transmission of a data package is illustrated in figure 1. Two transport channels 4 and 5 are mapped to two physical channels 6 and 7. A larger number of transport or physical channels may be in use at any time. The transport blocks 8 and 9 are created in the higher layers L2/L3. TFI blocks 10 and 11 are added to each transport block, defining for each block a predefined transport channel format (depending on bit rate for example). In the outer modem 2, each transport block 8 and TFI block 9 is respectively mapped, through coding and multiplexing means 12 and 13 onto a single physical data channel 6 (or more), and one physical control channel 7. Other operations may be performed, such as listed above, before the transfer blocks are actually sent to the inner modem 1 for transmission.

In the receiver (figure 2), the same signal 3 is picked up, and routed by the receiver's inner modem 1 to the input of the outer modem which will split the physical channel into physical data channel 20 and control channel 21. Here, the data block passes through decoding and demultiplexing means 22, while the TFCI block is decoded as well by means 23. At this point, the data received may be mapped to a number of transfer channels 24 and 25 (or more) in the receiver. The crucial point is the interpretation by L1, of the TFCI code which is received. The identification itself is traditionally done by using lookup tables, respectively a Transport Format Combination Set (TFCS) and a Transport Format Set (TFS). The network communicates the data formats, corresponding to the TFCI, beforehand to the L2/L3 software. Formerly, L1 was also mainly software, at least the outer modem, in which case the relevant data formats could be easily communicated. However, there is currently a tendency towards implementing the L1 in hardware, for reasons of power consumption and programmability. The present invention is primarily related to a communication device with a hardware implemented L1, i.e. inner and outer modem. One problem which arises however is the question of how to get the data formats through to L1. Some prior art solutions have already been proposed.

According to a first prior art solution, the TFS and TFCS tables are copied from the L2/L3 layers to the L1 hardware. The major disadvantage of this approach is the inefficient use of the memory because of the duplication of the tables. For a mobile 2Mbps capability, this memory will become two times 140kbit. Another prior art solution is to request the format for each incoming TFCI. This means that the L2/L3 software is interrupted regularly to give the format to the outer modem. The disadvantages of this approach are :
- the load of the processor running the software increases if you implement the lookup of the format in software,
- because it takes some time for a processor to execute interrupts and lookup the format, this mechanism is quite slow.

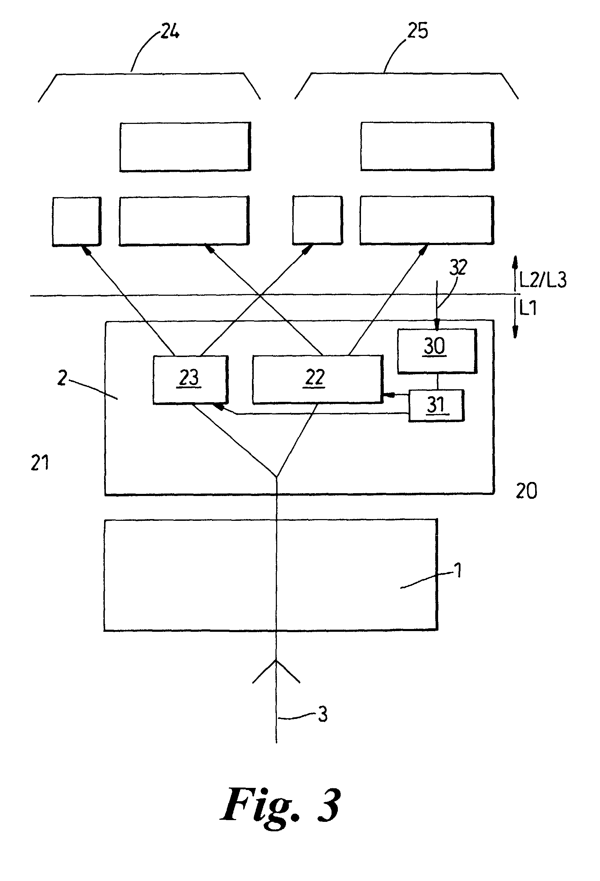

Figure 3 illustrates the solution offered by the present invention. A shared memory block 30 is implemented in L1, more particularly in the outer modem 2. The software (L2/L3) can write the different formats to this memory block 30, via a connection 32, and has to update the content of the memory block when necessary. A hardware Finite State Machine 31 which is part of the outer modem, can look up the corresponding formats for the decoded TFCI without depending on the software. The finite state machine then gives the corresponding transport formats to the decoding means 23 and to the decoding and demultiplexing means 22.

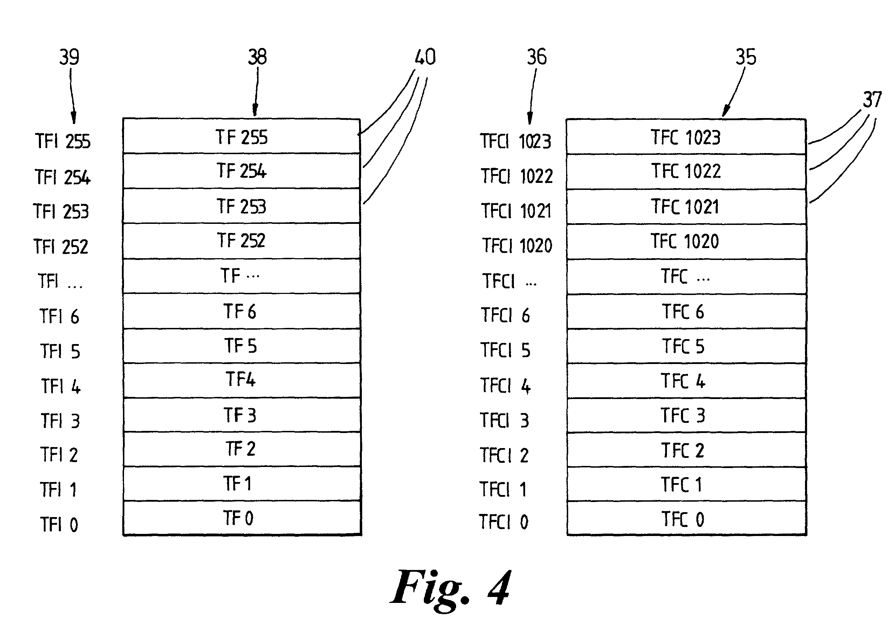

In particular, the memory block 30 contains two tables (figure 4):
- The TFCS table 35 (Transport Format Combination Set) has the TFCI as indicators 36 and a TFI for each Transport Channel as records 37. This table is built and maintained by the L2/L3 software.
- The TFS table 38 (Transport Format Set) has the TFI as index 39 and contains a transport format TF as records 40. This table is equally built and maintained by the L2/L3 format.

Independently of the way in which the L1 layer accesses the lookup table, the TF identification occurs as follows :
When an incoming TFCI is decoded, it points in the TFCS table to the TFI for each transport channel. The hardware, in particular the finite state machine now knows the TFI for each transport channel.
In the TFS table, each TFI points to a transport format. At this point, the finite state machine has interpreted the TFCI and found the transport format for each transport channel. Now the data coming in from the physical data channel can be adequately mapped onto a number of transport channels, in the correct format.

The invention relates to this same method, but wherein the lookup table is loaded into the shared memory block 30, by the higher layers, when necessary, said memory block 30 being a part of a hardware-implemented physical layer L1.
The invention equally relates to devices having such a hardware implemented physical layer L1, equipped with a shared memory block 30, as well as a connection 32 through which the higher layers can load up the lookup tables into said shared memory block.

The advantages offered by the present invention are the following :
- lower load for the processor. The software still has to maintain the shared memory block 30 and update it when necessary, but this updating is not based on a regular interrupt but on a change of format indicated by the network. This process occurs far less frequent than the looking up of a TFCI on each interrupt.
- Faster lookup of data format. Since there is no software interaction needed to look up the format, the corresponding format is known faster than with software interaction.

## Claims

1. A communication device comprising a physical layer (L1) and two or more higher layers (L2/L3), said physical layer comprising means to acquire a data modulated waveform signal (3), comprising at least one data block and an indicator of the format of said data block, means to process said block and indicator, in order to be able to map the received block onto a number of transport channels (24,25) in the higher layers, **characterized in that** said physical layer (L1) comprises:
- a shared memory block (30), wherein lookup tables (35,38) for transport formats (40) and transport format indicators (37) can be saved, allowing the physical layer (L1) to identify transport formats for one or more transport channels,
- a connection (32) between the physical layer (L1) and the higher layers which allows said lookup tables to be loaded into said shared memory block (30) from the higher layers,
- a finite state machine (31), capable of acquiring the transport format from the shared memory block (30).

2. The device of claim 1, wherein said higher layers consist of a data link layer (L2) and a network layer (L3).

3. The device of claim 1 or 2, wherein said physical layer (L1) is implemented in hardware.

4. The device of claim 3, wherein said physical layer (L1) comprises an inner modem (1) and an outer modem (2), and wherein said shared memory block (30) and said finite state machine are part or said outer modem (2).

5. The device of claim 1, realized as or as part of an integrated circuit.

6. A method of processing a data modulated waveform signal (3), comprising the steps of
- Receiving by a receiving device, a data modulated waveform signal (3), comprising at least one data block and at least one indicator of the format of said data block, said receiving device comprising a physical layer (L1), and a number of higher layers (L2/L3),
- transferring said data block over a physical data channel (20), while transferring said indicator over a physical control channel (21),
- decoding and demultiplexing said data block, in order to map said data block onto at least one transport channel (24,25),
- decoding said indicator of the format of said data block, resulting into one code (36) for the format of said data block,
- looking up in a first table (35), an indicator (37) to the format for each transport channel which corresponds to the code (36) for the format of said data block, said first table being present in a shared memory block (30), which is implemented in said physical layer (L1),
- looking up in a second table (38), all transport formats (40), which correspond to said indicator (37) to the format for each transport channel, said second table being present in said shared memory block (30), which is implemented in said physical layer (L1),
- mapping said data block onto said at least one transfer channel (24,25), in the correct transport format.

7. The method of claim 6, in which said data modulated waveform is used for one of the following applications: IMT-2000, 3GPP, 3GGP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B, IEEE802.16.
